# FASCICULE DE BREVET EUROPEEN

(11) **EP 1 609 640 B1**
(45) Date de publication et mention de la délivrance du brevet: **25.04.2007**
(21) Numéro de dépôt: 05104216.6
(22) Date de dépôt: 18.05.2005
(51) Int. Cl.: B60H 1/00, F28F 9/00

(54) **Boîtier à couvercle d'étanchéité externe et de calage, pour une installation de chauffage, ventilation et/ou climatisation d'habitacle**
Gehäuse mit einer Abdeckung mit Dichtung und Sicherungselement für eine Heiz-, Lüftungs- und/oder Klimaanlage für einen Fahrgastraum
Housing with a cover with gasket and locking element for a heating, ventilation and /or air conditioning installation for a passenger compartment

(30) Priorité: 21.06.2004 FR 0406721
(43) Date de publication de la demande: 28.12.2005
(73) Titulaire: Valeo Systèmes Thermiques, 78321 Le Mesnil St Denis Cedex (FR)
(72) Inventeur: Vincent, Philippe, Valeo Systèmes Thermiques, 28230 Epernon (FR); Terranova, Gilbert, Valeo Systèmes Thermiques, 78610 Le Perray en Yvelines (FR); Carton, Thomas, 78310 Maurepas (FR)

(56) Documents cités:
- DE-A1- 3 916 816
- FR-A- 2 830 609
- US-A- 5 662 162

## Description

L'invention concerne le domaine des installations de chauffage, ventilation et/ou climatisation d'habitacle, notamment de véhicule automobile, et plus précisément les boîtiers de telles installations, destinés à loger un échangeur de chaleur.

Une telle installation est décrite par US 5662162.

Comme le sait l'homme de l'art, en raison des tolérances de fabrication des échangeurs de chaleur, les logements destinés à les recevoir au sein des boîtiers du type précité, sont surdimensionnés. Ce surdimensionnement est particulièrement important lorsque l'échangeur de chaleur est du type dit "à flux en I", c'est-à-dire lorsqu'il comporte deux boîtes à eau séparées l'une de l'autre par un faisceau de tubes dans lesquels un fluide caloporteur circule suivant une unique direction.

Un échangeur de chaleur comprend des faces d'entrée d'air et de sortie d'air, des faces d'extrémité arrière et d'extrémité avant, et des première et seconde faces latérales coiffées chacune d'une boîte à eau (notamment dans le cas d'un flux en I), comportant une extrémité avant munie d'un orifice de raccordement à un circuit d'alimentation en fluide caloporteur. Le boîtier comporte une paroi d'extrémité avant dans laquelle est définie une ouverture permettant l'introduction (et l'extraction) de l'échangeur de chaleur en position transversale dans un canal de traitement et par lequel débouche sa face d'extrémité avant.

En raison du surdimensionnement précité, une partie du flux d'air qui parvient au niveau de la face d'entrée de l'échangeur de chaleur peut sortir du boîtier par le passage défini dans sa paroi d'extrémité avant. Cette fuite d'air froid vers l'extérieur du boîtier induit une perte de puissance thermique et un inconfort thermique dans l'habitacle, généralement au niveau des jambes du conducteur et éventuellement de celles du passager avant.

En outre, le surdimensionnement induit un problème de calage de l'échangeur de chaleur à l'intérieur du boîtier, en particulier au niveau de ses faces latérales.

Pour tenter de remédier à ces inconvénients, il a été proposé, d'une part, d'installer des cales en matériau élastique et compressible à l'intérieur des logements dans lesquels sont installées les boîtes à eau, et d'autre part, d'installer des moyens d'étanchéité au moins sur le pourtour du passage défini sur la paroi d'extrémité avant du boîtier. Ces cales et moyens d'étanchéité sont généralement des joints rapportés en mousse, par exemple en polyuréthanne (PU).

Grâce à ces joints une bonne étanchéité externe et un calage satisfaisant peuvent être assurés à l'état neuf. Cependant, lorsque ces joints rapportés vieillissent, leurs propriétés et performances ont tendance à se dégrader (écrasement, effritement), si bien qu'ils ne sont plus en mesure d'assurer l'étanchéité externe et le calage initiaux. Cela se traduit par une perte de puissance thermique et donc une perte de confort thermique à l'intérieur de l'habitacle du véhicule.

En outre, l'installation de ces joints, généralement sur les radiateurs, n'est pas très ergonomique et s'avère coûteuse, étant donné qu'elle requiert l'intervention manuelle d'une personne.

Il a également été proposé d'utiliser un couvercle pour obturer un passage dans un boîtier. Cependant, le couvercle proposé ne permet pas, d'une part, de réaliser l'étanchéité avec le boîtier au niveau des tubulures d'entrée et de sortie de l'échangeur de chaleur, et d'autre part, d'assurer cette étanchéité en raison des tolérances de fabrication de l'échangeur de chaleur, lorsque ses boîtes à eau sont intégrées dans le boîtier. En outre, l'installation du couvercle nécessite l'intervention d'une personne afin de fixer manuellement des joints rapportés, par exemple en PU.

L'invention a donc pour but d'améliorer la situation, notamment dans le cas d'échangeurs de chaleur à flux en I.

Elle propose à cet effet un boîtier, du type précité, pour le logement d'un échangeur de chaleur dans une installation de chauffage, ventilation et/ou climatisation, notamment de véhicule automobile.

Selon l'invention, ce boîtier comprend un couvercle, d'une première part, comportant au moins deux passages adaptés aux orifices de l'échangeur de chaleur, d'une deuxième part, destiné à être placé contre la face d'extrémité avant de l'échangeur de chaleur et à être solidarisé à la paroi d'extrémité avant, et d'une troisième part, comportant en outre des moyens d'étanchéité surmoulés et chargés de limiter (et si possible d'interdire) la sortie d'air par l'ouverture définie dans la paroi d'extrémité avant et/ou par l'un au moins des passages.

Le boîtier selon l'invention peut comporter des caractéristiques complémentaires qui peuvent être prises séparément ou en combinaison, et notamment:
· le couvercle peut comporter un bord périphérique muni sur sa face interne d'une bande périphérique d'étanchéité constituant une partie au moins des moyens d'étanchéité,
· une partie au moins des moyens d'étanchéité peut être agencée de manière à épouser le contour d'une partie au moins de chaque orifice. Dans ce cas, les moyens d'étanchéité sont réalisés dans un matériau élastique,
· lorsqu'un premier passage débouche entièrement au niveau de la face d'extrémité avant de l'échangeur de chaleur, la partie des moyens d'étanchéité peut définir une première collerette destinée à entourer étroitement le premier passage et l'orifice de raccordement correspondant,
· lorsqu'un second passage débouche entièrement sur la face d'extrémité avant de l'échangeur de chaleur, la partie des moyens d'étanchéité peut définir une seconde collerette destinée à entourer étroitement le second passage et l'orifice de raccordement correspondant,
· lorsqu'une partie de liaison d'un second passage fait saillie au niveau de la face d'extrémité avant de l'échangeur de chaleur, la partie des moyens d'étanchéité peut définir au moins une bande destinée à entourer étroitement une portion au moins de la partie de liaison du second passage,
· lorsque chaque passage comporte une partie de liaison faisant saillie au niveau de la face d'extrémité avant de l'échangeur de chaleur, la partie des moyens d'étanchéité peut définir au moins deux bandes destinées chacune à entourer étroitement une portion au moins de chacune des parties de liaison des passages,
· les moyens d'étanchéité peuvent comprendre au moins une bande auxiliaire, par exemple sensiblement rectiligne,
· le couvercle peut comprendre une coque réalisée dans un premier matériau rigide ou semi-rigide, et les moyens d'étanchéité sont surmoulés sur la coque et réalisés dans un second matériau présentant une élasticité et une compressibilité supérieures à celles du premier matériau,
· le couvercle peut comprendre des première et seconde demies-coques distantes, réalisées dans un second matériau rigide ou semi-rigide, et une première coque réalisée dans un premier matériau présentant une élasticité et une compressibilité supérieures à celles du premier matériau, définissant les moyens d'étanchéité, et solidarisée à la face interne des première et seconde demies-coques,
· le couvercle peut comporter une face externe munie de première et seconde parties entourant au moins partiellement ses passages et définissant chacune des moyens de fixation auxiliaires chargés respectivement de solidariser au couvercle un connecteur du circuit d'alimentation en fluide caloporteur,
· le couvercle peut comprendre des seconds moyens de fixation permettant la solidarisation d'un élément rapporté. A cet effet, le boîtier peut par exemple comprendre une seconde ouverture par laquelle débouche une face d'extrémité avant d'un radiateur de chaleur auxiliaire à résistance à coefficient de température positif (résistance CTP) constituant l'élément rapporté.

D'autres caractéristiques et avantages de l'invention apparaîtront à l'examen de la description détaillée ci-après, et des dessins annexés, sur lesquels :
· la figure 1 illustre de façon schématique, dans une vue en coupe partielle, une partie d'un exemple de boîtier d'une installation de chauffage, ventilation et/ou climatisation, équipé d'un échangeur de chaleur à flux en I,
· la figure 2 illustre de façon schématique, dans une vue du dessus, en perspective, une face d'extrémité avant d'un échangeur de chaleur, débouchant par un passage défini dans un boîtier selon l'invention, avant installation d'un couvercle,
· la figure 3 illustre de façon schématique, dans une vue en perspective, la face externe d'un exemple de couvercle,
· la figure 4 illustre de façon schématique, dans une vue en perspective, la face interne de l'exemple de couvercle de la figure 3,
· la figure 5 illustre de façon schématique, dans une vue du dessus, en perspective, le boîtier de la figure 2 équipé du couvercle illustré sur les figures 3 et 4,
· la figure 6 illustre de façon schématique, dans une vue en perspective, la face externe d'un autre exemple de couvercle, avant solidarisation à des connecteurs d'un circuit d'alimentation en fluide, et
· la figure 7 illustre de façon schématique, dans une vue en perspective, le couvercle de la figure 6, après solidarisation aux connecteurs du circuit d'alimentation en fluide.

Les dessins annexés pourront non seulement servir à compléter l'invention, mais aussi contribuer à sa définition, le cas échéant.

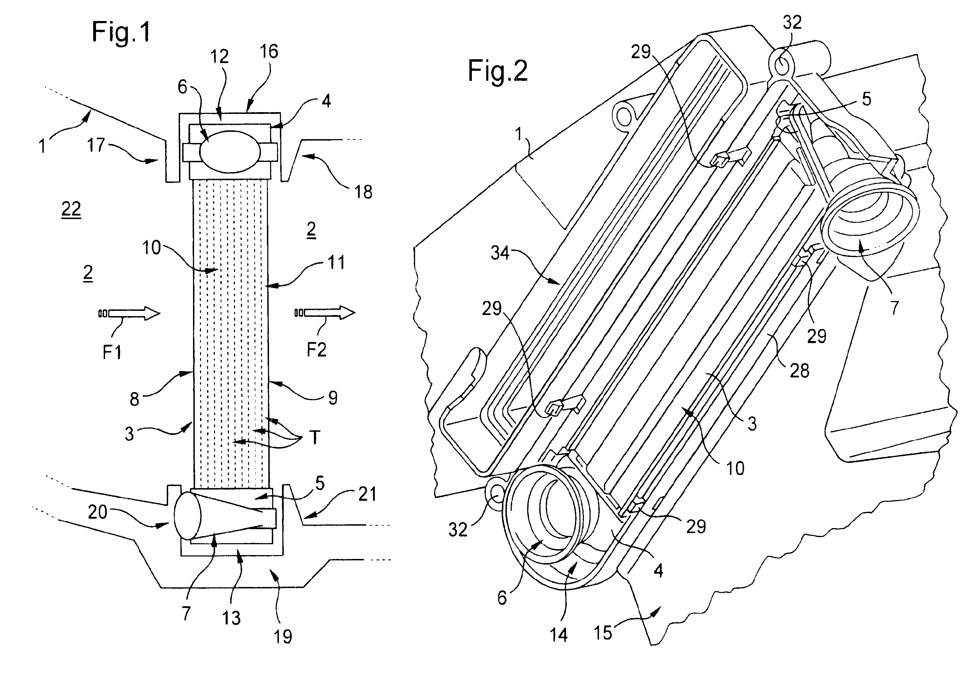

On se réfère tout d'abord aux figures 1 et 2 pour décrire un exemple de réalisation d'un boîtier de traitement de flux d'air 1, selon l'invention, d'une installation de chauffage, ventilation et/ou climatisation, par exemple d'un habitacle de véhicule automobile.

Le boîtier 1 peut être installé dans n'importe quelle partie du véhicule (avant, arrière, ou autre).

Le boîtier 1 (très partiellement illustré) est par exemple destiné à réchauffer un flux d'air provenant de l'extérieur de l'habitacle et/ou de l'intérieur de celui-ci, afin d'alimenter en air chaud l'habitacle du véhicule. Ses parois externes et internes (partiellement représentées) délimitent à cet effet un canal de chauffage 2 dans lequel est implanté un échangeur de chaleur 3, comme par exemple un radiateur de chauffage à circulation de fluide.

Dans la description qui suit, on considère à titre d'exemple non limitatif que l'échangeur de chaleur est un radiateur à flux en "I".

Il est rappelé qu'un échangeur de chaleur 3 à flux en I comprend deux boîtes à eau 4 et 5 séparées l'une de l'autre par un faisceau de tubes T dans lesquels circule un fluide caloporteur suivant une unique direction. Par conséquent, l'une des boîtes à eau, par exemple celle référencée 4, comporte un orifice (éventuellement conformé) 6 constituant une entrée d'alimentation destinée à être raccordée à un circuit externe d'alimentation en fluide caloporteur, et l'autre boîte, par exemple celle référencée 5, comporte un autre orifice (éventuellement conformé) 7 constituant une sortie, destinée à être raccordée au circuit externe.

Dans l'exemple illustré sur les figures 1 et 2, chaque boîte à eau est constituée de deux parties complémentaires. Mais, bien entendu, chaque boîte à eau pourrait être constituée d'une unique partie.

Le radiateur 3 comprend :
· une face d'entrée d'air 8 par laquelle pénètre le flux d'air à traiter (réchauffer) F1,
· une face de sortie d'air 9 par laquelle débouche le flux d'air traité (réchauffé) F2,
· des faces d'extrémité avant 10 et arrière 11 (la figure 1 étant une vue du dessus, la face d'extrémité avant 10 est superposée à la face d'extrémité arrière 11, si bien que cette dernière 11 n'est pas visible),
· une première face latérale 12 (placée perpendiculairement au plan de la feuille contenant la figure 1) coiffée de la première boîte à eau 4, et
· une seconde face latérale 13 (placée perpendiculairement au plan de la feuille contenant la figure 1) coiffée de la seconde boîte à eau 5.

Le radiateur 3 est implanté transversalement dans le conduit de chauffage 2 du boîtier 1, les extrémités de ses boîtes à eau 4 et 5, contenant l'entrée d'alimentation 6 et la sortie 7, débouchant à l'extérieur dudit boîtier 1 en vue du raccordement au circuit externe d'alimentation. Dans l'exemple illustré l'entrée d'alimentation 6 est formée au niveau de la face d'extrémité avant 10, tandis que la sortie 7 est formée dans la partie supérieure de la face d'entrée 8 c'est-à-dire quasiment au niveau de la face d'extrémité avant 10. Plus précisément, la sortie 7 s'étend selon une direction générale située entre un plan parallèle à la face d'entrée 8 et un plan parallèle à la face d'extrémité avant 10 (en d'autres termes, la sortie (ou tubulure) 7 est positionnée de façon oblique). La situation inverse est également possible. Il est également possible que l'entrée d'alimentation 6 et la sortie 7 soient toutes les deux formées au niveau de la face d'extrémité avant 10, ou bien toutes les deux formées dans la partie supérieure de la face d'entrée 8 ou de la face de sortie, c'est-à-dire quasiment au niveau de la face d'extrémité avant 10.

Afin de permettre l'implantation du radiateur 3 en position transversale, le boîtier 1 comporte une ouverture 14 définie dans une paroi d'extrémité avant 15 et des parois latérales 16, 17 et 18 d'une part, et 19, 20 et 21 d'autre part, définissant deux logements destinés respectivement à recevoir une partie au moins de l'une des boîtes à eau 4 et 5. Le radiateur 3 peut ainsi être installé dans le conduit de chauffage 2 en introduisant ses boîtes à eau 4 et 5 dans leurs logements respectifs puis en les translatant jusqu'à ce qu'ils arrivent en butée contre la paroi d'extrémité arrière 22 du boîtier 1, destinée à être placée en regard de sa face d'extrémité arrière 23.

Une fois le radiateur 3 installé dans le conduit de chauffage 2, sa face d'extrémité avant 10 est sensiblement en regard de la paroi d'extrémité avant 15, comme illustré sur la figure 2, au niveau de l'ouverture 14 qui y est définie.

Les logements recevant les boîtes à eau 4 et 5 et l'ouverture 14 sont surdimensionnés afm de tenir compte des tolérances de fabrication du radiateur 3. Du fait de ce surdimensionnement, une partie du flux d'air entrant F1 peut sortir du conduit de chauffage 2 dans l'espace libre situé entre le bord qui le délimite et le radiateur 3. Les contraintes dimensionnelles du radiateur imposent un couvercle facilement adaptable.

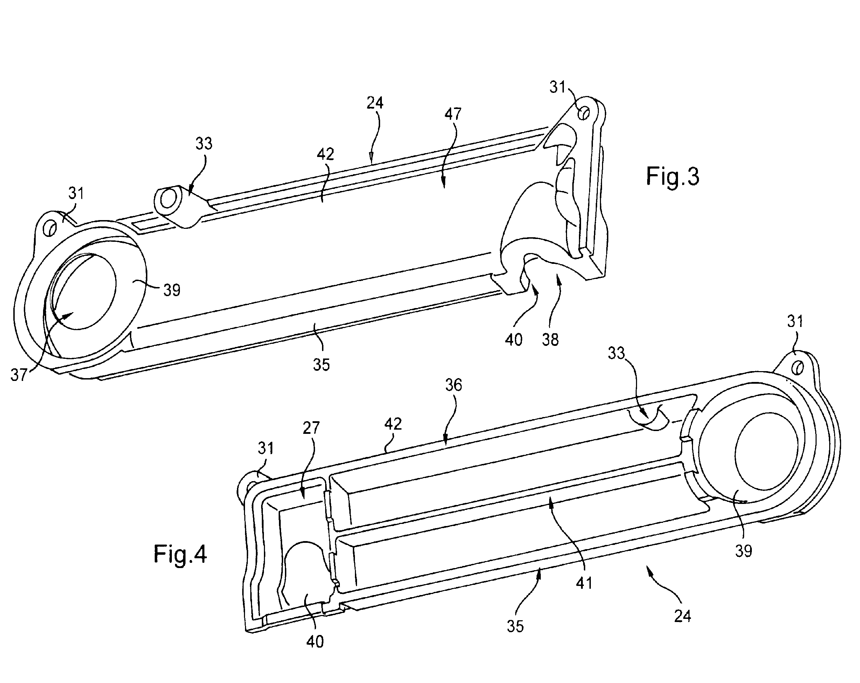

L'invention propose au moins d'étanchéifier de façon originale et durable dans le temps cet espace libre précité. Pour ce faire, elle propose d'adjoindre au boîtier 1 un couvercle 24 du type de celui illustré à titre d'exemple non limitatif sur les figures 3 et 4, et destiné à être placé contre la face d'extrémité avant 10 du radiateur 3, une fois celui-ci installé dans le canal de chauffage 2, et à être solidarisé à la paroi d'extrémité avant 15 en vue d'immobiliser ledit radiateur 3.

Plus précisément, ce couvercle 24 comprend au moins deux passages 25 et 26 adaptés à l'entrée d'alimentation 6 et à la sortie 7 du radiateur 3, et une face interne 27 munie en des endroits choisis de moyens d'étanchéité chargés de limiter, et de préférence d'interdire, la sortie d'air par l'ouverture 14 définie dans la paroi d'extrémité avant 15, une fois qu'il a été solidarisé à cette dernière.

La solidarisation du couvercle 24 à la paroi d'extrémité avant 15 peut se faire de différentes manières. Par exemple, comme illustré sur les figures 2 à 4, l'ouverture 14 peut être délimitée sur son pourtour par un bord périphérique 28 muni de premières pattes de fixation 29 comportant chacune, par exemple, une tête conformée de manière à immobiliser la face externe 30 du couvercle 24 (ou en variante à coopérer avec des logements conformés présentant des formes homologues à celles des premières pattes de fixation). Ici, on a représenté quatre premières pattes de fixation 29 munies de tête en biseau, mais leur nombre peut être inférieur ou supérieur à quatre. En outre, d'autres types de moyens de fixation, notamment à coopération de forme, peuvent être envisagés.

On peut également prévoir des moyens de fixation complémentaires de manière à renforcer la solidarisation. Ainsi, comme illustré sur les figures 2 à 4, on peut prévoir, d'une part, sur le couvercle 24 une ou plusieurs secondes pattes de fixation 31 munies chacune d'un trou traversant, et d'autre part, sur la paroi d'extrémité avant 15 (par exemple sur le bord périphérique 28) un ou plusieurs trous filetés 32 (en nombre égal au nombre de secondes pattes de fixation 31). Chaque trou fileté 32 est destiné à être placé en regard d'un trou traversant de l'une des secondes pattes de fixation 31 et à recevoir la partie filetée d'un moyen de serrage (non représenté), comme par exemple une vis ou un boulon.

Bien entendu, on peut envisager de n'utiliser comme moyens de fixation que les secondes pattes de fixation 31, les trous filetés 32 et les vis.

On peut également munir le couvercle 24, comme illustré sur les figures 2 à 4, de préférence sur sa face externe 30, de moyens de fixation auxiliaires 33 destinés à permettre la solidarisation d'un élément rapporté à la paroi d'extrémité avant 15 par l'intermédiaire dudit couvercle 24. Par exemple, le boîtier 1 peut comprendre, au niveau de sa paroi d'extrémité avant 15 et à côté de l'ouverture 14, une seconde ouverture conformée 34 permettant l'installation dans le conduit de chauffage 2, en aval du radiateur 3, d'un élément rapporté, tel qu'un radiateur de chaleur d'appoint à résistance à coefficient de température positif (résistance CTP), non représenté.

Bien entendu d'autres types de moyens de fixation auxiliaires peuvent être envisagés pour solidariser un élément rapporté à la paroi d'extrémité avant 15 du boîtier 1 par l'intermédiaire du couvercle 24.

Le couvercle 24 peut être réalisé de différentes manières, afin d'assurer au moins l'étanchéité externe du radiateur 3 au niveau de l'ouverture 14, ainsi que de préférence le calage du radiateur 3 dans le conduit de chauffage 2, par rattrapage de jeu.
Par exemple, le bord périphérique 35 du couvercle 24 peut être pourvu, sur sa face interne 27, d'une bande périphérique d'étanchéité 36, comme illustré sur la figure 4.

Ensuite, également comme illustré sur la figure 4, la face interne 27 du couvercle 24 peut comporter des moyens d'étanchéité au niveau des deux parties conformées définissant les deux passages conformés 37 et 38. Dans le cas d'un radiateur 3 comportant une entrée d'alimentation 6 conique axiale et une sortie 7 conique latérale, les moyens d'étanchéité qui sont solidarisés à la partie conformée définissant le passage (ou ouverture) conformé(e) 37, placé(e) contre l'entrée d'alimentation 6, sont préférentiellement en forme de collerette 39 sensiblement conique, tandis que les moyens d'étanchéité qui sont solidarisés à la partie conformée définissant le passage (ou déformation) conformé(e) 38, placé(e) contre la sortie 7, sont en forme de bande ou plus préférentiellement en forme de demie-collerette 40 semi-conique.

La conicité de la collerette 39 permet de maintenir un bon niveau d'étanchéité malgré les dispersions dimensionnelles des échangeurs de chaleur.

Bien entendu, en présence d'une entrée d'alimentation 6 et d'une sortie 7 coniques latérales leurs moyens d'étanchéité sont tous en forme de bande ou plus préférentiellement d'une demie-collerette 40 semi-conique. De même, en présence d'une entrée d'alimentation 6 et d'une sortie 7 coniques axiales leurs moyens d'étanchéité sont tous préférentiellement en forme de collerette 39 conique.

Ces formes de collerette et de demie-collerette offrent une étanchéité de qualité au niveau des entrée d'alimentation 6 et sortie 7 du radiateur 3, lorsque le couvercle 24 est plaqué contre sa face d'extrémité avant 10.

La coopération entre le couvercle 24 et le boîtier 1, notamment au niveau de la sortie 7 (oblique), participe également au calage du radiateur 3. En effet, ce dernier se trouve coincé et ne peut plus se déplacer latéralement.

On peut encore renforcer l'étanchéité en prévoyant sur la face interne 27 du couvercle 24 au moins une bande d'étanchéité longitudinale et centrale 41, comme illustré sur la figure 4.
Bien entendu, toute autre forme de moyens d'étanchéité, de nature à permettre une étanchéité de qualité au niveau de l'ouverture 14, définie dans la paroi d'extrémité avant 15, peut être envisagée, et notamment une ou plusieurs bandes d'étanchéité transverses, perpendiculaires à la bande d'étanchéité longitudinale et centrale 41. Ces formes dépendent principalement de l'agencement de la face d'extrémité avant 10 du radiateur 3.

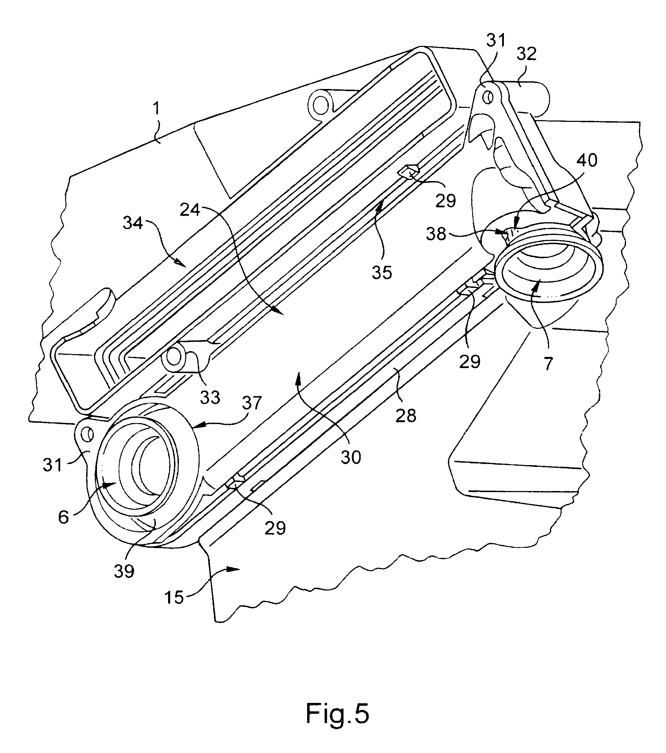

Afin d'assurer non seulement l'étanchéité externe du radiateur 3, mais également son calage latéral (entre les parois latérales 16 et 19 du boîtier 1) et son calage vertical (entre la paroi d'extrémité arrière 22 du boîtier 1 et la face interne 27 du couvercle 24), une fois le couvercle 24 solidarisé à la paroi d'extrémité avant 15 du boîtier 1 (comme illustré sur la figure 5), les moyens d'étanchéité sont préférentiellement réalisés dans un matériau présentant une élasticité et une compressibilité choisies. Le calage latéral est plus précisément assuré par les actions conjointes des moyens de fixation 29, 31 et 32, et des collerette 39 et demie-collerette 40 compressées. Le calage vertical est plus précisément assuré par les actions conjointes des moyens de fixation 29, 31 et 32, des bandes d'étanchéité 36 et 41 compressées et des collerette 39 et demie-collerette 40 compressées.

Ces moyens d'étanchéité sont préférentiellement réalisés en élastomère à longue durée de vie, comme par exemple un élastomère thermoplastique de type SEBS ou EPDM. Ils sont défmis en totalité ou partiellement par surmoulage, ici de la face interne 27, d'une coque 42 rigide ou semi-rigide, par exemple en PVC, PE, PA ou PP. Ainsi, on peut par exemple réaliser les collerette 39, la demie-collerette 40 et les bandes d'étanchéité périphérique 36 et centrale(s) 41 par surmoulage sur la coque 42.

On entend ici par "surmoulage" l'injection locale d'une matière à caractère souple en une opération et en des zones prédéterminées. La solidarisation peut se faire mécaniquement ou par thermo-fusion. Le surmoulage est avantageux car il ne demande pas d'intervention humaine. En effet, une première presse injecte dans un moule un matériau rigide, puis un automate prend la pièce ainsi constituée pour la mettre dans un autre moule où le matériau souple est injecté dans toutes les zones où une étanchéité est requise. Ainsi, on peut réaliser en deux opérations un couvercle complet qui nécessite habituellement quatre ou cinq opérations (moulage, collage, assemblage d'un premier joint périphérique en PU, assemblage d'un second joint pour les orifices, etc).
Dans ce qui précède on a décrit des modes de réalisation de couvercle 24 dans lesquels les moyens d'étanchéité (et de calage) n'étaient définis qu'en certaines zones choisies de la face interne 27 du couvercle 24. Mais, on peut envisager des modes de réalisation dans lesquels les moyens d'étanchéité recouvrent l'intégralité de la face interne 27 (et/ou de la face externe) du couvercle 24.

Plus précisément, dans cet exemple, le couvercle 24 comprend, d'une part, une première coque 43 réalisée dans un premier matériau présentant une élasticité et une compressibilité choisies, définissant l'ensemble des moyens d'étanchéité, et d'autre part, des première 44 et seconde 45 demies-coques distantes, réalisées dans un second matériau rigide ou semi-rigide, et solidarisées à la face externe (ou supérieure) de la première coque 43. L'élasticité et la compressibilité du premier matériau sont choisies supérieures à celles du second matériau.

Ici, le couvercle 24 est donc constitué par la combinaison de la première coque 43 et des première 44 et seconde 45 demies-coques.

La liaison entre les deux demies-coques 44 et 45 étant assurée par la première coque souple 43, le couvercle 24 présente une flexibilité et une élasticité centrales qui lui permettent en outre de rattraper des écarts de hauteur entre les extrémités avant des deux boîtes à eau 4 et 5 et de rattraper des écarts importants de positionnement relatif entre l'entrée d'alimentation 6 et la sortie 7. Cela permet également d'articuler le couvercle selon une forme en L de manière à fixer tout d'abord une partie conformée complémentaire 46 (sur laquelle on reviendra plus loin), puis à ramener la partie du couvercle comportant la demie-coque 44 vers le passage 25.

Au lieu de deux demies-coques solidarisées à la première coque 43 (définissant les moyens d'étanchéité (et de calage)), on peut envisager une unique seconde coque, rigide ou semi-rigide, solidarisée à ladite première coque 43. Mais, dans ce cas on ne dispose plus d'une flexibilité et d'une élasticité centrales.

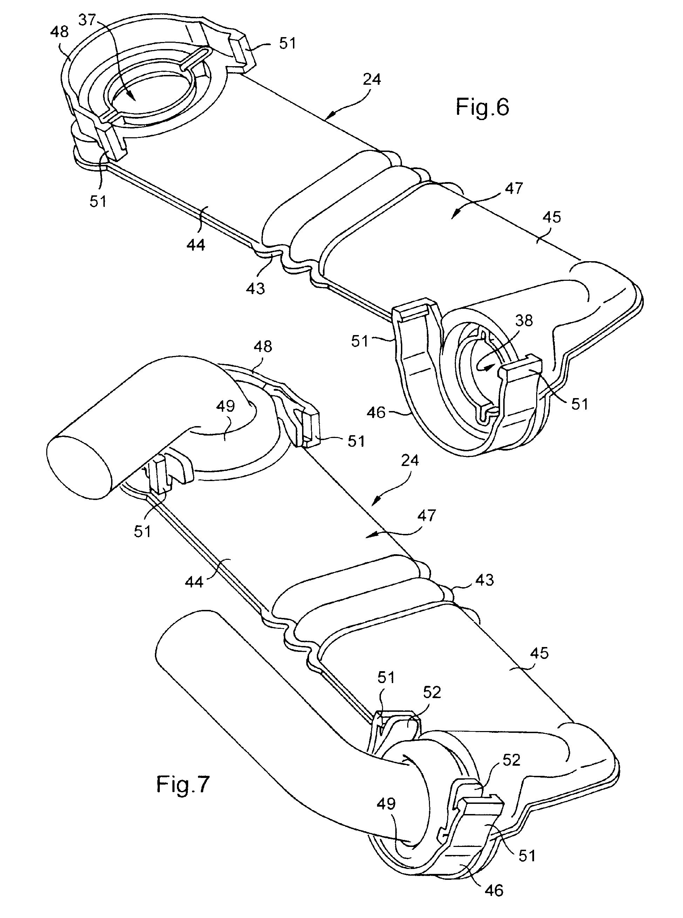

Dans ces deux derniers modes de réalisation, la première coque 43 peut être solidarisée aux deux demies-coques 44 et 45 (ou à la seconde coque) par collage ou par surmoulage.
Par ailleurs, comme cela est illustré sur les figures 6 et 7, le couvercle 24 peut comporter sur sa face externe 47 deux parties conformées complémentaires 48 et 46 entourant au moins partiellement ses passages adaptés 25 et 26. Chacune de ces parties complémentaires 48 et 46 comporte des moyens de fixation auxiliaires chargés de solidariser au couvercle 24 l'un des deux connecteurs 49 et 50 du circuit d'alimentation en fluide caloporteur. Par exemple, et comme illustré, chaque partie complémentaire 48, 46 est agencée sous la forme d'une paroi semi-circulaire munie à chacune de ses deux extrémités flexibles d'un premier moyen de fixation 51 à coopération de forme destiné à coopérer avec l'un de deux seconds moyens de fixation 52 à coopération de forme installés sur les connecteurs 49 et 50.

Les moyens d'étanchéité sont, comme décrit ci-avant, préférentiellement surmoulés sur la face interne du couvercle 24. Mais, cela n'est pas une obligation. En effet, il peuvent être surmoulés sur la face externe du couvercle ou sur sa tranche.

L'invention ne se limite pas aux modes de réalisation de boîtier décrits ci-avant, seulement à titre d'exemple, mais elle englobe toutes les variantes que pourra envisager l'homme de l'art dans le cadre des revendications ci-après.

## Revendications

1. Boîtier (1) pour le logement, dans une installation de chauffage, ventilation et/ou climatisation, notamment de véhicule automobile, d'un échangeur de chaleur (3) comprenant une face d'entrée d'air (8), une face de sortie d'air (9), une face d'extrémité arrière (11), une face d'extrémité avant (10), et de première (12) et seconde (13) faces latérales coiffées chacune d'une boîte à eau (4, 5) comportant une extrémité avant munie d'un orifice (6, 7) de raccordement à un circuit d'alimentation en fluide caloporteur, ledit boîtier (1) comportant une paroi d'extrémité avant (15) comprenant une ouverture (14) en regard de ladite face d'extrémité avant (10) dudit échangeur de chaleur (3), **caractérisé en ce qu**'il comprend en outre un couvercle (24) i) comportant au moins deux passages (37, 38) adaptés auxdits orifices (6, 7), ii) propre à être placé contre la face d'extrémité avant (10) dudit échangeur de chaleur (3) et à être solidarisé à ladite paroi d'extrémité avant (15), et iii) des moyens d'étanchéité (39, 40, 36, 41) surmoulés et agencés pour limiter la sortie d'air par ladite ouverture (14) et/ou par l'un au moins desdits passages (37,38).

2. Boîtier selon la revendication 1, **caractérisé en ce qu'**une partie au moins desdits moyens d'étanchéité (39, 40) est agencée pour épouser le contour d'une partie au moins de chaque passage (37, 38), et **en ce que** lesdits moyens d'étanchéité (39, 40) sont réalisés dans un matériau élastique.

3. Boîtier selon la revendication 2, **caractérisé en ce qu'**un premier (37) desdits passages débouche entièrement sur ladite face d'extrémité avant (10) dudit échangeur de chaleur (3), et **en ce que** ladite partie des moyens d'étanchéité (39, 40) définit une première collerette (39) propre à entourer étroitement ledit premier passage (37) et ledit orifice de raccordement (6).

4. Boîtier selon la revendication 3, **caractérisé en ce qu**'un second (38) desdits passages débouche entièrement sur ladite face d'extrémité avant (10) dudit échangeur de chaleur (3), et en ce que ladite partie des moyens d'étanchéité (39, 40) définit une seconde collerette propre à entourer étroitement ledit second passage (38) et ledit orifice de raccordement (7).

5. Boîtier selon l'une des revendications 2 et 3, **caractérisé en ce qu**'une partie de liaison d'un second (38) desdits passages fait saillie au niveau de ladite face d'extrémité avant (10) dudit échangeur de chaleur (3), et en ce que ladite partie des moyens d'étanchéité (39, 40) définit au moins une bande (40) propre à entourer étroitement une portion au moins de ladite partie de liaison dudit second passage (38).

6. Boîtier selon la revendication 2, **caractérisé en ce que** chaque passage (37, 38) comporte une partie de liaison faisant saillie au niveau de la face d'extrémité avant (10) dudit échangeur de chaleur (3), et **en ce que** ladite partie des moyens d'étanchéité définie au moins deux bandes (40) propres chacune à entourer étroitement une portion au moins de chacune desdites parties de liaison desdits passages (37, 38).

7. Boîtier selon l'une des revendications 1 à 6, **caractérisé en ce que** ledit couvercle (3) comporte un bord périphérique (35) muni d'une bande périphérique d'étanchéité (36) constituant une partie au moins desdits moyens d'étanchéité.

8. Boîtier selon l'une des revendications 1 à 7, **caractérisé en ce que** lesdits moyens d'étanchéité comprennent au moins une bande auxiliaire (41).

9. Boîtier selon l'une des revendications 1 à 8, **caractérisé en ce que** ledit couvercle (24) comprend une coque (42) réalisée dans un premier matériau rigide ou semi-rigide, et **en ce que** lesdits moyens d'étanchéité (39, 40, 36, 41) sont surmoulés sur ladite coque (42) et réalisés dans un second matériau présentant une élasticité et une compressibilité supérieures à celles du premier matériau.

10. Boîtier selon l'une des revendications 1 à 8, **caractérisé en ce que** ledit couvercle comprend de première (44) et seconde (45) demies-coques distantes, réalisées dans un premier matériau rigide ou semi-rigide, et une première coque (43) réalisée dans un second matériau présentant une élasticité et une compressibilité supérieures à celles du premier matériau, définissant au moins lesdits moyens d'étanchéité (39, 40, 36, 41), et solidarisée à la face interne desdites première (44) et seconde (45) demies-coques.

11. Boîtier selon l'une des revendications 1 à 10, **caractérisé en ce que** ledit couvercle (24) comporte une face externe (47) munie de première (48) et seconde (46) parties entourant au moins partiellement lesdits passages (37, 38) et comportant chacune des moyens de fixation auxiliaires (51) agencés pour solidariser respectivement des connecteurs (49, 50) dudit circuit d'alimentation en fluide caloporteur audit couvercle (24).

12. Boîtier selon l'une des revendications 1 à 11, **caractérisé en ce que** ledit couvercle (24) comprend des seconds moyens de fixation (33) agencés pour permettre la solidarisation d'un élément rapporté.

13. Boîtier selon la revendication 12, **caractérisé en ce qu**'il comprend une seconde ouverture (34) par laquelle débouche une face d'extrémité avant d'un radiateur de chaleur auxiliaire à résistance à coefficient d e température positif (résistance CTP) constituant ledit élément rapporté.

## Claims

1. Casing for housing, in a heating, ventilation and/or air conditioning installation, particularly of a motor vehicle, a heat exchanger (3) comprising an air inlet face (8), an air outlet face (9), a rear end face (11), a front end face (10), and first (12) and second (13) side faces each capped with a radiator tank (4, 5) comprising a front end furnished with an orifice (6, 7) for connection to a heat transfer fluid supply circuit, said casing (1) comprising a front end wall (15) comprising an opening (14) opposite said front end face (10) of said heat exchanger (3), **characterized in that** it also comprises a cover (24) i) comprising at least two passages (37, 38) adapted to suit said orifices (6, 7), ii) suitable to be placed against the front end face (10) of said heat exchanger (3) and to be fixedly attached to said front end wall (15), and iii) sealing means (39, 40, 36, 41) overmolded and arranged in order to limit the outlet of air via said opening (14) and/or via at least one of said passages (37, 38).

2. Casing according to claim 1, **characterized in that** at least one part of said sealing means (39, 40) is arranged to espouse the contour of at least one part of each passage (37, 38), and **in that** said sealing means (39, 40) are made of an elastic material.

3. Casing according to claim 2, **characterized in that** a first (37) of said passages leads entirely to said front end face (10) of said heat exchanger (3), and **in that** said part of the sealing means (39, 40) defines a first collar (39) suitable for tightly surrounding said first passage (37) and said connection orifice (6).

4. Casing according to claim 3, **characterized in that** a second (38) of said passages leads entirely to said front end face (10) of said heat exchanger (3), and **in that** said part of the sealing means (39, 40) defines a second collar suitable for tightly surrounding said second passage (38) and said connection orifice (7).

5. Casing according to one of claims 2 and 3, **characterized in that** a linking part of a second (38) of said passages protrudes at said front end face (10) of said heat exchanger (3), and **in that** said part of the sealing means (39, 40) defines at least one band (40) suitable for tightly surrounding at least a portion of said linking part of said second passage (38).

6. Casing according to claim 2, **characterized in that** each passage (37, 38) comprises a linking part protruding at the front end face (10) of said heat exchanger (3), and **in that** said part of the sealing means defines at least two bands (40) each suitable for tightly surrounding at least a portion of each of said linking parts of said passages (37, 38).

7. Casing according to one of claims 1 to 6, **characterized in that** said cover (3) comprises a peripheral edge (35) furnished with a peripheral sealing band (36) forming at least one part of said sealing means.

8. Casing according to one of claims 1 to 7, **characterized in that** said sealing means comprise at least one auxiliary band (41).

9. Casing according to one of claims 1 to 8, **characterized in that** said cover (24) comprises a shell (42) made of a first rigid or semi-rigid material, and **in that** said sealing means (39, 40, 36, 41) are overmolded on said shell (42) and made of a second material having a greater elasticity and compressibility than those of the first material.

10. Casing according to one of claims 1 to 8, **characterized in that** said cover comprises first (44) and second (45) half-shells some distance apart, made of a first rigid or semi-rigid material, and a first shell (43) made of a second material having a greater elasticity and compressibility than those of the first material, defining at least said sealing means (39, 40, 36, 41) and fixedly attached to the inner face of said first (44) and second (45) half-shells.

11. Casing according to one of claims 1 to 10, **characterized in that** said cover (24) comprises an outer face (47) furnished with first (48) and second (46) parts at least partially surrounding said passages (37, 38) and each comprising auxiliary attachment means (51) arranged to fixedly attach respectively connectors (49, 50) of said heat transfer fluid supply circuit to said cover (24).

12. Casing according to one of claims 1 to 11, **characterized in that** said cover (24) comprises second attachment means (33) arranged to allow the fixed attachment of a fitted element.

13. Casing according to claim 12, **characterized in that** it comprises a second opening (34) through which emerges a front end face of an auxiliary heat radiator with a positive temperature coefficient resistor (PTC resistor) forming said fitted element.

## Patentansprüche

1. Gehäuse (1) zur Aufnahme eines Wärmeaustauschers (3) in einer Heizungs-, Lüftungs- und/oder Klimaanlage, insbesondere von Kraftfahrzeugen, wobei der Wärmeaustauscher eine Lufteintrittsfläche (8) und eine Luftaustrittsfläche (9), eine rückseitige Abschlussfläche (11) und eine vorderseitige Abschlussfläche (10) sowie eine erste Seitenwand (12) und eine zweite Seitenwand (13) besitzt, an denen jeweils ein Wasserkasten (4,5) angebracht ist, der auf seiner vorderseitigen Abschlussfläche eine Öffnung (6,7) zum Anschluss an einen Versorgungskreis mit Heiz- bzw. Kühlmedium besitzt, während das Gehäuse (1) eine vorderseitige Abschlusswand (15) mit einer Öffnung (14) besitzt, die der vorderseitigen Abschlussfläche (10) des Wärmeaustauschers (3) gegenüber liegt, **dadurch gekennzeichnet, dass** es weiterhin mit einem Deckel (24) versehen ist, der i) mindestens zwei Durchlassöffnungen (37, 38) besitzt, die an die besagten Öffnungen (6,7) angepasst sind, ii) so ausgelegt ist, dass er an der vorderseitigen Abschlussfläche (10) des Wärmeaustauschers (3) angebracht und fest mit der besagten vorderseitigen Abschlusswand (15) verbunden werden kann, und iii) durch Umspritzen gebildete Dichtmittel (39, 40, 36, 41) besitzt, die so angeordnet sind, dass sie das Austreten von Luft durch die besagte Öffnung (14) und/oder durch mindestens eine der besagten Öffnungen (37, 38) begrenzen.

2. Gehäuse nach Patentanspruch 1, **dadurch gekennzeichnet, dass** mindestens ein Teil der Dichtmittel (39, 40) so ausgelegt ist, dass er sich an die Kontur mindestens eines Teils jeder Durchlassöffnung (37, 38) anschmiegt. In diesem Fall bestehen die Dichtmittel (39, 40)aus einem elastischen Material.

3. Gehäuse nach Patentanspruch 2, **dadurch gekennzeichnet, dass** sich eine erste Durchlassöffnung (37) direkt an der vorderseitigen Abschlussfläche (10) des Wärmeaustauschers (3) befindet und dass der betreffende Teil der Dichtmittel (39, 40) einen ersten Kragen (39) bildet, der dazu dient, die Durchlassöffnung (37) und die entsprechende Anschlussöffnung (6) eng zu umschließen.

4. Gehäuse nach Patentanspruch 3, **dadurch gekennzeichnet, dass** sich eine zweite Durchlassöffnung (38) direkt an der vorderseitigen Abschlussfläche (10) des Wärmeaustauschers (3) befindet und dass der betreffende Teil der Dichtmittel (39, 40) einen zweiten Kragen bildet, der dazu dient, die Durchlassöffnung (38) und die entsprechende Anschlussöffnung (7) eng zu umschließen.

5. Gehäuse nach einem der Patentansprüche 2 oder 3, **dadurch gekennzeichnet, dass** ein Verbindungsteil einer zweiten (38) der besagten Durchlassöffnungen über die vorderseitige Abschlussfläche (10) des Wärmeaustauschers (3) hinausragt und dass der betreffende Teil der Dichtmittel (39, 40) mindestens einen Dichtungsstreifen (40) bilden, der dazu dient, mindestens einen Abschnitt des Verbindungsteils der zweiten Durchlassöffnung (38) eng zu umschließen.

6. Gehäuse nach Patentanspruch 2, **dadurch gekennzeichnet, dass** jede Durchlassöffnung (37, 38) ein Verbindungsteil besitzt, das über die vorderseitige Abschlussfläche (10) des Wärmeaustauschers (3) hinausragt und der betreffende Teil der Dichtmittel mindestens zwei Dichtungsstreifen (40) bildet, von denen jede dazu dient, mindestens einen Abschnitt des Verbindungsteils der jeweiligen Durchlassöffnung (37, 38) eng zu umschließen.

7. Gehäuse nach einem der Patentansprüche 1 bis 6, **dadurch gekennzeichnet, dass** der Deckel (3) eine umlaufende Kante (35) besitzt, die auf ihrer Innenseite einen umlaufenden Dichtungsstreifen (36) aufweist, der mindestens einen Teil der Dichtmittel bildet.

8. Gehäuse nach einem der Patentansprüche 1 bis 7, **dadurch gekennzeichnet, dass** die Dichtmittel mindestens einen zusätzlichen Dichtungsstreifen (41) aufweisen.

9. Gehäuse nach einem der Patentansprüche 1 bis 8, **dadurch gekennzeichnet, dass** der Deckel (24) aus einer Schale (42) besteht, die aus einem ersten steifen oder halbelastischen Material gefertigt ist, und die Dichtmittel (39, 40, 36, 41) durch Umspritzen der Schale (42) gebildet werden sowie aus einem Material bestehen, dessen Elastizität und Kompressionsfähigkeit größer sind als die des ersten Materials.

10. Gehäuse nach einem der Patentansprüche 1 bis 8, **dadurch gekennzeichnet, dass** der Deckel aus zwei voneinander getrennten ersten (44) und zweiten (45) Schalenhälften, die aus einem zweiten, steifen oder halbelastischen Material gefertigt sind, sowie aus einer ersten Schale (43) besteht, die aus einem Material gefertigt ist, dessen Elastizität und Kompressionsfähigkeit größer sind als die des ersten Materials und die somit mindestens die Dichtmittel (39, 40, 36, 41) bildet und fest mit der Innenseite der ersten (44) und zweiten (45) Schalenhälfte verbunden ist.

11. Gehäuse nach einem der Patentansprüche 1 bis 10, **dadurch gekennzeichnet, dass** der Deckel (24) eine Außenseite (47) mit ersten (48) und zweiten (46) Teilen besitzt, die mindestens teilweise deren Durchlassöffnungen (37, 38) umgeben und jeweils Hilfsbefestigungsmittel (51) zur jeweiligen festen Verbindung der beiden Anschlussstutzen (49, 50) mit dem Deckel (24) für die Versorgung des Wärmeaustauschers mit Heizmedium besitzen.

12. Gehäuse nach einem der Patentansprüche 1 bis 11, **dadurch gekennzeichnet, dass** der Deckel (24) zweite Befestigungsmittel (33) zur festen Verbindung eines Anbauteils mit ihm besitzt.

13. Gehäuse nach Patentanspruch 12, **dadurch gekennzeichnet, dass** er eine zweite Öffnung (34) besitzt, die sich an der vorderseitigen Abschlussfläche eines das Anbauteil bildenden elektrischen Zusatzheizkörpers mit positivem Temperaturkoeffizient (CTP-Heizwiderstand) befindet.
